# EUROPEAN PATENT APPLICATION

(11) **EP 0 983 723 A1**
(43) Date of publication of application: **08.03.2000**
(21) Application number: 99306511.9
(22) Date of filing: 18.08.1999
(51) Int. Cl.: A01N 43/80

(54) **Stable microbicide formulation**

(30) Priority: 31.08.1998 US 98611 P
(71) Applicant: ROHM AND HAAS COMPANY, Philadelphia, Pennsylvania 19106-2399 (US)
(72) Inventor: Mattox, John Robert, Perkasie, Pennsylvania 18944 (US); Simon, Ethan Scott, Abington, Pennsylvania 19001 (US); Petigara, Ramesh Balubhai, Hatfield, Pennsylvania 19440 (US)
(74) Representative: Davis, Carole Amanda

(57) **Abstract**

Stable, precipitate-free microbicidal compositions containing a 3-isothiazolone compound, monovalent metal nitrate, cupric ion in the form of a copper salt and water are disclosed. Also disclosed are methods of reducing the amount of monovalent metal nitrate needed to stabilize 3-isothiazolone compositions.

## Description

### Background of the Invention

This invention relates to the stabilization of microbicides. In particular, this invention relates to the improved stabilization of 3-isothiazolone microbicides.

Microbicides are used commercially to prevent the growth of microbes in a variety of loci, such as cooling towers, metal working fluid systems, paint and cosmetics. One of the more important classes of microbicides is 3-isothiazolones. Many 3-isothiazolones have achieved commercial success because they are very effective in preventing microbial growth under a wide variety of conditions and in a variety of loci. Among the most important 3-isothiazolones are 5-chloro-2-methyl-3-isothiazolone, 2-methyl-3-isothiazolone, and mixtures thereof.

While 3-isothiazolones are very effective microbicides, they suffer from being unstable under certain conditions. Without the presence of a stabilizer, many 3-isothiazolones chemically degrade and lose microbicidal efficacy. Much research has been devoted to stabilizing 3-isothiazolones.

Typical 3-isothiazolone products of a 3:1 mixture of 5-chloro-2-methyl-3-isothiazolone and 2-methyl-3-isothiazolone contain between 1 and 25 percent by weight of the 3-isothiazolone mixture and a similar amount of a stabilizer. Concentrate compositions of a 3:1 mixture of 5-chloro-2-methyl-3-isothiazolone and 2-methyl-3-isothiazolone generally contain about 5 to 30 percent by weight of the 3-isothiazolone compounds and require about 10 to 25 percent by weight of a stabilizer. Dilute solutions of a 3:1 mixture of 5-chloro-2-methyl-3-isothiazolone and 2-methyl-3-isothiazolone contain about 0.5 to 5 percent by weight of the 3-isothiazolone compounds, and require from 5 to 23 percent by weight of a stabilizer.

In general, the compounds that stabilize 3-isothiazolone concentrates do not stabilize 3-isothiazolone dilute solutions. Compounds, such as magnesium nitrate, that do stabilize both 3-isothiazolone concentrates and dilute solutions do so in greatly differing amounts. More magnesium nitrate is required to stabilize a 3-isothiazolone dilute solution than a concentrate, 23 percent by weight for dilute solutions as compared to 12 to 16 percent by weight for concentrates. As dilute solutions are typically prepared by diluting 3-isothiazolone concentrate compositions, this need for additional stabilizer results in increased costs and handling.

Cupric ion is also known as a stabilizer for 3-isothiazolones, but normally in conjunction with magnesium nitrate. In general, the ratio of the cupric salt to 3-isothiazolone is about 1:10 since relatively small amounts of cupric ion are necessary for effective stabilization. Commercial 3-isothiazolone products are known containing 1.5 %wt 3-isothiazolone, 1.7 %wt of magnesium nitrate and 0.15 %wt (1500 ppm) copper nitrate. Other commercial products contain 1.5 %wt 3-isothiazolone, 1.7 %wt magnesium nitrate (a divalent metal nitrate), and 0.015-0.02 %wt (150-200 ppm) of copper nitrate.

Although the use of stabilizers, such as metal nitrate salts, enables 3-isothiazolone products to retain their microbicidal efficacy for considerable periods of time, other problems may develop, such as the formation of an appreciable amount of precipitate upon storage. The presence of this precipitate does not impact the efficacy of the 3-isothiazolones; however, the presence of the precipitate gives undesirable appearance to users of the product. It is clearly preferable from a commercial standpoint to have a product which does not form a precipitate.

US 5,670,529 (Clarke) discloses the use of very low levels (up to 100 ppm) of cupric ion to prevent precipitate formation in 3-isothiazolone concentrates stabilized with magnesium nitrate (a divalent metal nitrate salt). This patent does not recognize the problem of stability upon dilution of 3-isothiazolone concentrates to form dilute solutions.

A problem with the known metal salt stabilizers for 3-isothiazolones is that when a 3-isothiazolone stabilized with a divalent metal salt is added to a latex formulation, the divalent metal salt can coagulate the latex. 3-Isothiazolone concentrates stabilized with a monovalent metal salt are less likely to coagulate a latex than those stabilized with a divalent metal salt. However, these concentrates still require additional stabilizer when diluted to form 3-isothiazolone dilute solutions.

Thus, there is a continuing need for stable 3-isothiazolone concentrate compositions that remain stable when diluted to form dilute solutions without the need for additional stabilizer and are free of undesirable precipitate.

### Summary of the Invention

It has now surprisingly been found that the addition of a very small amount of cupric ion to a monovalent metal nitrate stabilized 3-isothiazolone concentrate provides 3-isothiazolone compositions that are precipitate-free, noncorrosive, stable upon dilution to form dilute solutions, and show reduced coagulation of latexes.

The present invention is directed to a stable, precipitate-free microbicide composition having: (a) 1 to 30 %wt, based on the total weight of the composition, of a water soluble 3-isothiazolone compound; (b) 5 to 25 %wt, based on the total weight of the composition, of a monovalent metal nitrate; (c) greater than 100 ppm of cupric ion in the form of a water-soluble copper salt; and (d) water.

The present invention is also directed to a method of reducing the amount of monovalent metal nitrate stabilizer in an aqueous monovalent metal nitrate stabilized 3-isothiazolone composition comprising combining with the 3-isothiazolone composition greater than 100 ppm of cupric ion in the form of a water-soluble copper salt.

The present invention is also directed to a method of controlling or inhibiting the growth of microorganisms in a locus comprising introducing to the locus a composition as described above.

### Detailed Description of the Invention

As used throughout the specification, the following terms shall have the following meanings, unless the context clearly indicates otherwise.

The term "microbicide" refers to a compound capable of inhibiting the growth of or controlling the growth of microorganisms at a locus. The term "microorganism" includes, but is not limited to, fungi, bacteria, and algae. "Locus" refers to an industrial system or product subject to contamination by microorganisms.

As used in this specification, the following abbreviations are applied: HPLC = high performance liquid chromatography; C = centigrade; ppm = parts per million; g = gram; and %wt = percent by weight.

All amounts are percent by weight and all ratios are by weight, unless otherwise noted. All ranges are inclusive.

Any water soluble 3-isothiazolone compound is useful in the compositions of the present invention. Water soluble 3-isothiazolone compounds are those having a water solubility greater than 1000 ppm. Suitable 3-isothiazolone compounds include, but are not limited to: 5-chloro-2-methyl-3-isothiazolone; 2-methyl-3-isothiazolone; 2-ethyl-3-isothiazolone; 5-chloro-2-ethyl-3-isothiazolone; 2-isopropyl-3-isothiazolone; 5-chloro-2-isopropyl-3-isothiazolone; 4,5-dichloro-2-methyl-3-isothiazolone; and mixtures thereof. Preferred 3-isothiazolones are 5-chloro-2-methyl-3-isothiazolone; 2-methyl-3-isothiazolone; and mixtures thereof. When mixtures of 5-chloro-2-methyl-3-isothiazolone and 2-methyl-3-isothiazolone are used, the ratio of 5-chloro-2-methyl-3-isothiazolone to 2-methyl-3-isothiazolone is generally 99:1 to 1:99, preferably 90:10 to 75:25.

The amount of water soluble 3-isothiazolone compound useful in the compositions of the present invention is 1 to 30 %wt, based on the total weight of the composition. It is preferred to use 1.5 to 25 %wt; and more preferably, 12 to 18 %wt, based on the total weight of the composition.

Any water soluble monovalent metal nitrate may be used in the compositions of the present invention. Suitable metal nitrates include, but are not limited to: lithium nitrate, sodium nitrate, potassium nitrate, and ammonium nitrate. It is preferred that the metal nitrate is lithium nitrate, sodium nitrate, or potassium nitrate, and more preferably sodium nitrate or potassium nitrate. More than one monovalent metal nitrate may be used advantageously in the compositions of the present invention.

The amount of monovalent metal nitrate necessary to stabilize the 3-isothiazolone concentrate compositions of the present invention is typically 5 to 25 %wt, based on the weight of the composition. It is preferred to use monovalent metal nitrate in an amount of 10 to 20 %wt, and more preferably in an amount of 12 to 20 %wt. The metal nitrates are generally commercially available, for example, from Aldrich Chemical Company (Milwaukee, Wisconsin) and may be used without further purification.

A wide variety of copper salts are known in the art. Any copper salt which is sufficiently water soluble to provide the desired level of cupric ion in solution may be used. Suitable examples include, but are not limited to: copper sulfate, copper acetate, copper chloride, copper bromide, copper chlorate, copper perchlorate, copper nitrite and copper nitrate. Copper sulfate and copper nitrate are preferred. The copper salts are generally commercially available, for example, from Aldrich Chemical Company (Milwaukee, Wisconsin) and may be used without further purification.

The amount of cupric ion useful in the compositions of the present invention is typically greater than 100 ppm, based on the total weight of the composition. It is preferred to use 120 to 500 ppm of cupric ion, and more preferably 120 to 200 ppm, based on the total weight of the composition.

Particularly useful compositions of the present invention comprise 12 to 18 %wt of a water soluble 3-isothiazolone; 10 to 20 %wt of a monovalent metal nitrate selected from the group consisting of sodium nitrate and potassium nitrate; 120 to 200 ppm of cupric ion in the form of a copper salt selected from the group consisting of copper nitrate and copper sulfate; and water. All percentages used above are based on the total weight of the composition.

In preparing the compositions of the present invention, the 3-isothiazolone, monovalent metal nitrate, cupric ion, and water can be mixed in any order. It is preferred that the compositions of the present invention are prepared by adding the cupric ion in the form of a copper salt to a mixture of 3-isothiazolone, monovalent metal nitrate, and water.

An advantage of the compositions of the present invention is that they show no visible precipitate formation, even after storage for 4 weeks at 55° C. Dilute solutions prepared by diluting 3-isothiazolone concentrates of the present invention are also precipitate free upon storage. In addition, dilute solutions prepared according to the present invention do not need additional stabilizer, thus reducing the cost and extra handling associated with known 3-isothiazolone concentrates.

A further advantage of the compositions of the present invention is that flocculation, or coagulation, of emulsions and latexes is reduced. This reduces the need for pre-dilutions of 3-isothiazolone microbicides for use in latex or emulsion preservation.

One of the further advantages of the present invention is that the amount of monovalent metal salt needed to stabilize 3-isothiazolone concentrates can be reduced, thereby further reducing the possibility of coagulation when added to emulsions or latexes. For example, a typical monovalent metal nitrate salt stabilized 3-isothiazolone composition contains 12 to 18 %wt of 3-isothiazolone and 25 to 30 % wt of monovalent metal nitrate. When 25 to 500 ppm of cupric ion in the form of a water-soluble copper salt is added to the composition, only 10 to 20 %wt of monovalent metal nitrate salt is required to achieve the same 3-isothiazolone stabilization.

The compositions of the present invention can be used to inhibit the growth of microorganisms by introducing a microbicidally effective amount of the compositions onto, into, or at a locus subject to microbial attack. Suitable loci include, but are not limited to: cooling towers; air washers; boilers; mineral slurries; wastewater treatment; ornamental fountains; reverse osmosis filtration; ultrafiltration; ballast water; evaporative condensers; heat exchangers; pulp and paper processing fluids; plastics; emulsions and dispersions; paints; latexes; coatings, such as varnishes; construction products, such as mastics, caulks, and sealants; construction adhesives, such as ceramic adhesives, carpet backing adhesives, and laminating adhesives; industrial or consumer adhesives; photographic chemicals; printing fluids; household products, such as bathroom disinfectants or sanitizers; cosmetics and toiletries; shampoos; soaps; detergents; industrial disinfectants or sanitizers, such as cold sterilants, hard surface disinfectants; floor polishes; laundry rinse water; metalworking fluids; conveyor lubricants; hydraulic fluids; leather and leather products; textiles; textile products; wood and wood products, such as plywood, chipboard, flakeboard, laminated beams, oriented strandboard, hardboard, and particleboard; petroleum processing fluids; fuel; oilfield fluids, such as injection water, fracture fluids, and drilling muds; agriculture adjuvant preservation; surfactant preservation; medical devices; diagnostic reagent preservation; food preservation, such as plastic or paper food wrap; pools; and spas. Preferred loci are cooling towers; air washers; boilers; mineral slurries; wastewater treatment; ornamental fountains; reverse osmosis filtration; ultrafiltration; ballast water; evaporative condensers; heat exchangers; pulp and paper processing fluids; plastics; emulsions and dispersions; paints; latexes; coatings; and metal working fluids.

The amount of 3-isothiazolone compounds suitable to inhibit or control the growth of microorganisms is well known in the art and depends upon the locus to be protected. The amount of 3-isothiazolone microbicide suitable to inhibit the growth of microorganisms is generally between 0.05 and 5,000 ppm, based on the volume of said locus to be protected. It is preferred to use between 0.1 and 2,500 ppm. For example, loci such as a cooling tower or pulp and paper processing fluids require 0.1 to 100 ppm of the 3-isothiazolone microbicides to inhibit microorganism growth. In cooling towers or pulp and paper processing fluids, it is preferred to use between 0.1 and 50 ppm. Other loci, such as construction products, oilfield fluids or emulsions, require 0.5 to 5000 ppm of the 3-isothiazolone microbicides to inhibit microorganism growth, while loci such as disinfectants or sanitizers may require up to 5,000 ppm.

It is known in the art that the performance of antimicrobial agents may be enhanced by combination with one or more other antimicrobial agents. Thus, other known microbicidal agents may be combined advantageously with the compositions of the present invention.

The following examples are presented to illustrate further various aspects of the present invention, but are not intended to limit the scope of the invention in any aspect.

### Example 1

Samples of monovalent metal nitrate stabilized 3-isothiazolone concentrate compositions were evaluated to determine whether they caused coagulation of latexes. Three samples, labelled A, B, and C, were prepared by weighing into each of three bottles an amount of a 3:1 mixture of 5-chloro-2-methyl-3-isothiazolone ("CMI") and 2-methyl-3-isothiazolone ("MI") sufficient to provide 14 %wt of 3-isothiazolone in the product. To each of these samples were then added sodium nitrate and water. The amount of sodium nitrate in each of these samples was 20 %wt. To samples A, B and C was also added cupric ion in the form of copper nitrate. The amount of cupric ion in samples A, B, and C was 186, 300 and 73 ppm, respectively. Each sample was then stirred until all salts had dissolved. Sample C-1, a comparative, was a commercially available aqueous preparation having 14 %wt of a 3:1 mixture of CMI and MI and 26 %wt sodium nitrate, but no cupric ion. Sample C-2, also a comparative, was a commercial product containing 14 %wt of a 3:1 mixture of CMI and MI and 26 %wt of divalent metal ion (16 %wt of magnesium nitrate and 10 %wt of magnesium chloride), but no cupric ion.

Two drops of each of four different commercial acrylic emulsions that are sensitive to salt shock were placed on a glass slide. To each of these was added one drop of each of samples A, B, C, C-1, and C-2. Each emulsion was visually inspected for flocculation. The samples were rated as follows: "P" means the emulsion did not cause flocculation; "F" means the sample did cause flocculation; and "P/F" means that the sample caused slight flocculation. The results are reported in Table 1.

**Table 1**

| Emulsion | Sample A | Sample B | Sample C | Sample C-1 | Sample C-2 |
|---|---|---|---|---|---|
| 1 | P/F | F | P | F | F |
| 2 | P | P/F | P | F | F |
| 3 | F | F | P | F | F |
| 4 | F | F | P | F | F |

The above data show that a very small amount of cupric ion is very effective in reducing the coagulation of emulsions preserved with monovalent metal nitrate salt stabilized 3-isothiazolone microbicides.

## Claims

1. A stable, precipitate-free microbicide composition comprising:
(a) 1 to 30 %wt, based on the weight of the composition, of a water soluble 3-isothiazolone compound;
(b) 5 to 25 %wt, based on the weight of the composition, of a monovalent metal nitrate;
(c) greater than 100 ppm of cupric ion in the form of a water-soluble copper salt; and
(d) water.

2. The composition of claim 1 wherein the 3-isothiazolone compound is selected from the group consisting of 5-chloro-2-methyl-3-isothiazolone; 2-methyl-3-isothiazolone; 2-ethyl-3-isothiazolone; 5-chloro-2-ethyl-3-isothiazolone; 2-isopropyl-3-isothiazolone; 5-chloro-2-isopropyl-3-isothiazolone; 4,5-dichloro-2-methyl-3-isothiazolone; and mixtures thereof.

3. The composition of claim 2 wherein the 3-isothiazolone compound is selected from the group consisting of 5-chloro-2-methyl-3-isothiazolone; 2-methyl-3-isothiazolone; and mixtures thereof.

4. The composition of claim 1 wherein the cupric ion is present in an amount of 120 to 500 ppm, based on the total weight of the composition.

5. The composition of claim 1 wherein the 3-isothiazolone compound is present in an amount of 1.5 to 25 %wt, based on the total weight of the composition.

6. The composition of claim 1 wherein the monovalent metal nitrate is selected from the group consisting of lithium nitrate; sodium nitrate; and potassium nitrate.

7. The composition of claim 1 wherein the 3-isothiazolone is present in an amount of 12 to 18 %wt; the monovalent metal nitrate is sodium nitrate and is present in an amount of 10 to 20 %wt; and the cupric ion is present in an amount of 120 to 200 ppm and is in the form of a copper salt selected from the group consisting of copper nitrate and copper sulfate.

8. A method of reducing the amount of monovalent metal nitrate stabilizer in an aqueous monovalent metal nitrate stabilized 3-isothiazolone composition comprising combining with the 3-isothiazolone composition greater than 100 ppm of cupric ion in the form of a water-soluble copper salt.

9. The method of claim 8 wherein the 3-isothiazolone compound is selected from the group consisting of: 5-chloro-2-methyl-3-isothiazolone; 2-methyl-3-isothiazolone; and mixtures thereof.

10. A method of controlling or inhibiting the growth of microorganisms in a locus comprising introducing to the locus the composition of claim 1.
